# EUROPÄISCHE PATENTSCHRIFT

(11) **EP 0 987 131 B1**
(45) Veröffentlichungstag und Bekanntmachung des Hinweises auf die Patenterteilung: **27.03.2002**
(21) Anmeldenummer: 99113187.1
(22) Anmeldetag: 08.07.1999
(51) Int. Cl.: B60H 1/00

(54) **Heizbare Profilleiste eines Fahrzeugseitenfensters**
Heatable profile strip for the side windows of a vehicle
Cordon profilé chauffable d'une fenêtre latérale d'un véhicule

(30) Priorität: 29.08.1998 DE 19839494
(43) Veröffentlichungstag der Anmeldung: 22.03.2000
(73) Patentinhaber: HAPPICH Fahrzeug- und Industrieteile GmbH, 42285 Wuppertal (DE)
(72) Erfinder: Marcus, Armin, 42399 Wuppertal (DE); Gebel, Thomas, 42111 Wuppertal (DE)

(56) Entgegenhaltungen:
- EP-A- 0 059 545
- DE-A- 3 302 511
- DE-U- 8 909 131
- WEIBLE R ET AL: "MIKROCOMPUTER-STEUERUNGSSYSTEM FUER HEIZUNGS- UND KLIMAANLAGEN IN KRAFTFAHRZEUGEN" , VDI BERICHTE,DE,DUESSELDORF, NR. 612, PAGE(S) 251-267 XP000672533 ISSN: 0083-5560 * Abbildung 3 *

## Beschreibung

Die Erfindung bezieht sich auf ein Fahrzeug mit fahrzeuginnenseitiger Fensterbrüstung und daran befestigter Profilleiste.

Im Innenraum von Fahrzeugen bildet eine karosserieseitige Fensterbrüstung im allgemeinen den unteren Abschluß von Fahrzeugseitenfenstern. Die Fensterbrüstung ist in der Regel mit einer Profilleiste bestückt, die aus ästhetischen Gründen vorgesehen ist aber auch dazu dient, mit einem senkrecht nach unten weisenden Schenkel Fahrzeuginnen-Verkleidungselemente, zu halten. Solche Fensterbrüstungen sind in vielen Fahrzeugen (Land-, Luft- und Wasserfahrzeugen) vorgesehen, so daß der Begriff "Fahrzeug" im weitesten Sinne verstanden werden soll.

Wie die Praxis gezeigt hat, lehnen sich Fahrzeuginsassen gerne an die Profilleiste (Brüstungsleiste) an oder nutzen diese auch als Armauflage. Diese Art Nutzung nimmt aber während der kalten Jahreszeit rapide ab, weil die von der jeweiligen Fensterscheibe und Fahrzeugaußenhaut auf die Profilleiste übertragenden Temperaturen dann als äußerst unangenehm empfunden werden. Andererseits sind die Fahrzeughersteller sehr daran interessiert ihren Kunden größtmöglichen Komfort zu bieten, wozu es auch gehört Kältebrücken zu unterbinden oder zu kaschieren.

Der vorliegenden Erfindung liegt die Aufgabe zugrunde, bei einem Fahrzeug mit einer Fensterbrüstung und einer daran befestigten Verblendung, Profilleiste od. dgl. Vorsorge dafür zu treffen, daß die Verblendung bzw. Profilleiste auch während der kalten Jahreszeit z. B. als Armauflage ohne unangenehme Begleiterscheinungen benutzt werden kann.

Der Erfindung zufolge wird diese Aufgabe durch eine im Fensterbrüstungsbereich angeordnete elektrische Heizeinrichtung gelöst.

Durch eine solche elektrische Heizeinrichtung, die von der allgemeinen Fahrzeugelektrik betrieben werden kann, ist es möglich, die Brüstungsleiste schnell auf eine angenehme Temperatur zu bringen und diese Temperatur zu halten. Der Umstand, daß elektrische Heizeinrichtungen auf dem Fahrzeuggebiet gebräuchlich sind, und zwar in Form beheizbarer Heckscheiben, Außenspiegel oder auch Sitze konnte nicht ohne weiteres zur Erfindung führen, weil es hierfür erforderlich gewesen wäre, einerseits das geschilderte Problem zu erkennen und andererseits auch die Feststellung zu treffen, daß das Stromversorgungsnetz eines Fahrzeugs zur Problemlösung herangezogen werden kann und auch dem Energiebedarf genügt. Es ist auch ein Verdienst der Erfinder, nach dem Erkennen des Problems eine elektrische Heizeinrichtung vorzusehen und nicht etwa, wie es möglicherweise nähergelegen hätte, auf einen relativ aufwendigen Warmwasserkreislauf zurückzugreifen.

Die elektrische Heizeinrichtung kann in einfacher Weise zwischen der Fensterbrüstung und der Profilleiste angeordnet sein. Die Anordnung kann dabei an der Fensterbrüstung und/oder an der Profilleiste erfolgen.

Sofern die Anordnung der elektrischen Heizeinrichtung an der Profilleiste bevorzugt wird, empfiehlt es sich, die Profilleiste mit längsdurchlaufenden Kanälen, die zur Fensterbrüstung hin offen oder auch geschlossen, wie einextrudiert sein können, auszubilden.

Die Heizeinrichtung umfaßt zumindest einen elektrischen Widerstandsdraht, der ggf. in Zickzack- oder Wellenform gelegt ist. Zweckmäßigerweise ist der Widerstandsdraht in einem Träger aus einem elektrisch isolierten Material eingebettet. Im einfachsten Fall besteht der Träger aus den Heizleiter beidseitig abdeckenden Abdeckfolien.

Gemäß einer Ausgestaltung der Erfindung kann der Heizleiter aus einem metallisierten Flächengebilde, wie Bandware, Webware, Maschenware, Vlies, metallisierten Stapelfasern oder einer Drahtwicklung gebildet sein.

Um den Energiebedarf so gering wie eben möglich zu halten, sind in Weiterbildung der Erfindung Mittel vorgesehen, die die Wärmeleistung des Heizleiters im wesentlichen zur Profilleiste hinlenken und die Wärmeableitung zur karosserieseitigen Fensterbrüstung hin weitgehend unterbinden. Hierzu kann der Heizleiter in einem Träger eingebettet sein, der an einer Seite des Heizleiters aus einem wärmeisolierenden Material und an der anderen Seite des Heizleiters aus einem die flächenspezifische Wärmeleistung des Heizleiters nicht behindernden Material besteht. Es kann sich zusätzlich empfehlen, die Profilleiste mit wärmeleitfähigen Mitteln, wie Aluminiumfolien oder dgl. auszustatten.

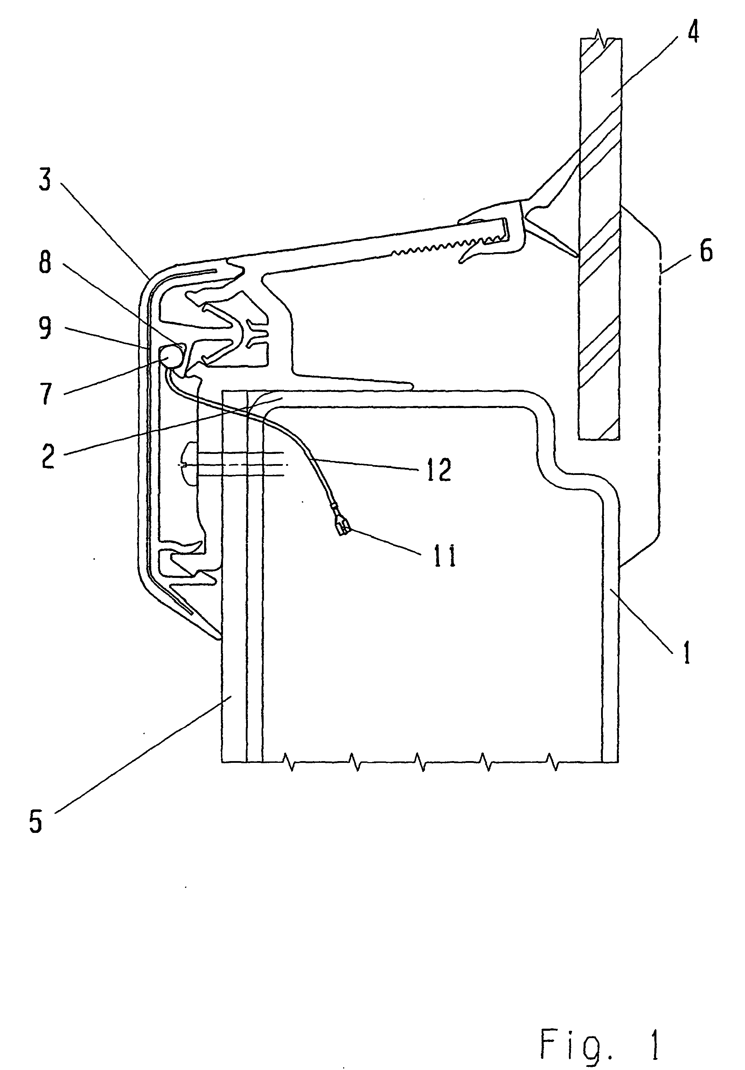

Ein Ausführungsbeispiel der Erfindung wird nachfolgend anhand der Zeichnung näher erläutert, wobei die Zeichnung lediglich die Fig. 1 umfaßt.

Die einzige Fig. 1 zeigt eine Fahrzeugseitenwand 1, bei der es sich um die eines Autobusses handeln kann. Auf einer fahrzeuginneren Fensterbrüstung 2 ist eine Profilleiste 3, die z. B. aus Kunststoff besteht abgestützt, deren horizontal ausgerichteter Profilschenkel an einer Fahrzeugseitenscheibe 4 anliegt und deren vertikal ausgerichteter Schenkel ein Fahrzeugverkleidungselement 5 übergreift. An der Außenseite der Fahrzeugseitenscheibe 4 liegt eine Außenprofilleiste 6 an.

Die Profilleiste 3 wird von Fahrzeuginsassen gerne zum Anlehnen oder auch als Armauflage genutzt. Um diese Nutzung auch in der kalten Jahreszeit ohne unangenehme Kältebeeinflussung für die Fahrzeuginsasssen zu ermöglichen, ist nun im Fensterbrüstungsbereich eine elektrische Heizeinrichtung mit zumindest einem Heizleiter 7 vorgesehen. Die Heizeinrichtung befindet sich zwischen der Fensterbrüstung 2 und der Profilleiste 3 und dabei zweckmäßigerweise in einem durchlaufenden Längskanal 8 der Profilleiste 3. Die Anordnung der Heizeinrichtung in einem Längskanal 8, der auch - anders als dargestellt - als Hohlkanal gestaltet sein kann, ermöglicht eine Vormontage der Heizeinrichtung an der Profilleiste 3.

In der Profilleiste 3 ist eine Aluminiumfolie 9 eingelagert. Eine solche Folie 9 kann auch hinterklebt sein. Mit Vorteil kann auch eine nicht gezeigte Wärmeisolationsschicht 10 vorgesehen sein.

An den Enden des Heizleiters 7 kann jeweils ein gestrichelt angedeuteter Kabelschuh 11 angeschlagen sein, der mit einem zum elektrischen Versorgungsnetz des Fahrzeugs gehörenden elektrischen Leiter 12 verbunden ist. Es versteht sich, daß Kabelschuh 11 und Leiter 12 abgedeckt anzuordnen sind.

Der Aufbau der elektrischen Heizeinrichtung ist nicht näher zu erläutern, weil ein Fachmann insoweit auf herkömmliche Systeme zurückgreifen kann, die dann dem neuen Anwendungszweck entsprechend anzupassen sind. Es soll auch offengelassen werden, ob die elektrische Heizeinrichtung mit einer elektrischen Regeleinrichtung zwecks Vermeidung einer Überhitzung auszustatten ist oder ob es empfehlenswert ist, den Widerstand des Heizleiters 7 so einzustellen, daß bei der maximalen Betriebsspannung, insbesondere der in Kraftfahrzeugen üblichen Spannung von 12 oder 24 V, eine bestimmte, vorgegebene Temperatur nicht überschritten wird. Dem Fachmann sollen im Rahmen der Erfindung alle Möglichkeiten offen stehen. Insoweit soll ein Fachmann auch nicht daran gehindert sein, einen Heizleiter 7 vorzusehen, der sich über die gesamte Länge eines Fahrzeugs, z. B. Autobusses erstreckt oder der in hintereinander angeordneten Heizleiterelemente unterteilt ist.

## Patentansprüche

1. Fahrzeug mit Fensterbrüstung (2) **gekennzeichnet durch** eine im Fensterbrüstungsbereich angeordnete elektrische Heizeinrichtung.

2. Fahrzeug nach Anspruch 1, **dadurch gekennzeichnet, daß** die Heizeinrichtung zwischen der Fensterbrüstung (2) und einer Verblendung, Profilleiste (3) od. dgl. angeordnet ist.

3. Fahrzeug nach Anspruch oder 2, **dadurch gekennzeichnet, daß** die Heizeinrichtung an der Fensterbrüstung (2) und/oder an der Verblendung bzw. Profilleiste (3) angeordnet ist.

4. Fahrzeug nach wenigstens einem der Ansprüche 1 bis 3, **dadurch gekennzeichnet, daß** die Profilleiste (3) längsdurchlaufende Kanäle (8) zur Anordnung bzw. Aufnahme der Heizeinrichtung aufweist.

5. Fahrzeug nach wenigstens einem der Ansprüche 1 bis 4, **dadurch gekennzeichnet, daß** die Heizeinrichtung zumindest einen elektrischen Widerstandsdraht (7) umfaßt, der ggf. in Zickzack- oder Wellenform gelegt ist.

6. Fahrzeug nach wenigstens einem der Ansprüche 1 bis 5, **dadurch gekennzeichnet, daß** die Heizeinrichtung einen Träger aus einem elektrisch isolierten Material mit zumindest einen darin eingebetteten Heizleiter (7) umfaßt.

7. Fahrzeug nach Anspruch 6, **dadurch gekennzeichnet, daß** der Träger aus den zumindest einen Heizleiter (7) beidseitig abdeckenden Abdeckfolien besteht.

8. Fahrzeug nach wenigstens einem der Ansprüche 1 bis 7, **dadurch gekennzeichnet, daß** der Heizleiter (7) aus einem metallisierten Flächengebilde, wie Webware, Maschenware, Vlies, metallisierten Stapelfasern oder einer Drahtwicklung gebildet ist.

9. Fahrzeug nach wenigstens einem der Ansprüche 1 bis 8, **dadurch gekennzeichnet, daß** Mittel vorgesehen sind, um die Wärmeleistung des Heizleiters (7) im wesentlichen zur Profilleiste (3) hinzulenken und um die Wärmeableitung zur karosserieseitigen Fensterbrüstung (2) hin weitgehend zu unterbinden.

10. Fahrzeug nach wenigstens einem der Ansprüche 1 bis 9, **dadurch gekennzeichnet, daß** der Heizleiter (7) in einem Träger eingebettet ist, der an einer Seite des Heizleiters (7) aus einem wärmeisolierenden Material und an der anderen Seite des Heizleiters aus einem die flächenspezifische Wärmeleistung des Heizleiters (7) nicht behindernden Material besteht.

11. Fahrzeug nach wenigstens einem der Ansprüche 1 bis 10, **dadurch gekennzeichnet, daß** die Profilleiste (3) mit wärmeleitfähigen Mitteln wie Aluminiumfolien (9) oder dgl. ausgestattet ist.

## Claims

1. Vehicle having a window parapet (2), **characterized by** an electric heating device arranged in the region of the window parapet.

2. Vehicle according to Claim 1, **characterized in that** the heating device is arranged between the window parapet (2) and a facing, profiled strip (3) or the like.

3. Vehicle according to Claim 1 or 2, **characterized in that** the heating device is arranged on the window parapet (2) and/or on the facing or profiled strip (3).

4. Vehicle according to at least one of Claims 1 to 3, **characterized in that** the profiled strip (3) has channels (8) running through it longitudinally for the arrangement or accommodating of the heating device.

5. Vehicle according to at least one of Claims 1 to 4, **characterized in that** the heating device comprises at least one electric resistance wire (7) which is laid in a zigzag or wavy form, if appropriate.

6. Vehicle according to at least one of Claims 1 to 5, **characterized in that** the heating device comprises a support made of an electrically insulated material having at least one heat conductor (7) embedded in it.

7. Vehicle according to Claim 6, **characterized in that** the support comprises covering foils which cover the at least one heat conductor (7) on both sides.

8. Vehicle according to at least one of Claims 1 to 7, **characterized in that** the heat conductor (7) is formed from a metal-coated surface structure, such as textile fabric, mesh fabric, nonwoven fabric, metal-coated staple fibres or a wire winding.

9. Vehicle according to at least one of Claims 1 to 8, **characterized in that** means are provided in order to steer the heat output of the heat conductor (7) essentially towards the profiled strip (3) and in order largely to suppress the dissipation of heat to the window parapet (2) on the vehicle body.

10. Vehicle according to at least one of Claims 1 to 9, **characterized in that** the heat conductor (7) is embedded in a support which is composed, on one side of the heat conductor (7), of a heat-insulating material and, on the other side of the heat conductor, of a material which does not impede the surface-specific heat output of the heat conductor (7).

11. Vehicle according to at least one of Claims 1 to 10, **characterized in that** the profiled strip (3) is equipped with heat-conductive means, such as aluminium foils (9) or the like.

## Revendications

1. Véhicule avec appui de fenêtre (2) **caractérisé par** un dispositif de chauffage électrique disposé dans la région de l'appui de fenêtre.

2. Véhicule selon la revendication 1, **caractérisé en ce que** le dispositif de chauffage est disposé entre l'appui de fenêtre (2) et un écran, une latte profilée (3) ou similaires.

3. Véhicule selon la revendication 1 ou 2, **caractérisé en ce que** le dispositif de chauffage est disposé contre l'appui de fenêtre (2) et/ou contre l'écran ou la latte profilée (3).

4. Véhicule selon au moins l'une des revendications 1 à 3, **caractérisé en ce que** la latte profilée (3) présente des canaux longitudinaux continus (8) pour l'agencement ou la réception du dispositif de chauffage.

5. Véhicule selon au moins l'une des revendications 1 à 4, **caractérisé en ce que** le dispositif de chauffage comprend au moins un fil (7) de résistance électrique qui est éventuellement posé en zigzag ou en forme d'ondulations.

6. Véhicule selon au moins l'une des revendications 1 à 5, **caractérisé en ce que** le dispositif de chauffage comprend un support en un matériau électriquement isolant dans lequel au moins un conducteur chauffant (7) est incorporé.

7. Véhicule selon la revendication 6, **caractérisé en ce que** le support est constitué de feuilles de recouvrement recouvrant des deux côtés le conducteur chauffant (7) au moins présent.

8. Véhicule selon au moins l'une des revendications 1 à 7, **caractérisé en ce que** le conducteur chauffant (7) est formé d'un produit plat métallisé, par exemple un produit tissé, un produit à mailles, un feutre, un empilement de fibres métallisées ou un enroulement de fils.

9. Véhicule selon au moins l'une des revendications 1 à 8, **caractérisé en ce que** des moyens sont prévus pour orienter la puissance de chauffage du conducteur chauffant (7) essentiellement vers la latte profilée (3) et pour empêcher en grande partie l'évacuation de chaleur vers le côté de l'appui de fenêtre (2) tourné vers la carrosserie.

10. Véhicule selon au moins l'une des revendications 1 à 9, **caractérisé en ce que** le conducteur chauffant (7) est incorporé dans un support qui, d'un côté du conducteur chauffant (7), est constitué d'un matériau thermiquement isolant et, de l'autre côté du conducteur chauffant, d'un matériau qui ne gêne pas la puissance calorifique par unité de surface du conducteur chauffant (7).

11. Véhicule selon au moins l'une des revendications 1 à 10, **caractérisé en ce que** la latte profilée (3) est dotée de moyens thermiquement conducteurs tels que des feuilles d'aluminium (9) ou similaires.
